# EUROPÄISCHE PATENTSCHRIFT

(11) **EP 0 480 075 B1**
(45) Veröffentlichungstag und Bekanntmachung des Hinweises auf die Patenterteilung: **14.04.1993**
(21) Anmeldenummer: 90117414.4
(22) Anmeldetag: 10.09.1990
(51) Int. Cl.: E02B 8/02, E03F 5/14

(54) **Fördersiebrechen**
Conveying sieve grid
Grillage de tamis de transport

(43) Veröffentlichungstag der Anmeldung: 15.04.1992
(73) Patentinhaber: Bormet, Horst, D-64331 Weiterstadt (DE)
(72) Erfinder: Klasnic, Branco, W-8000 München 81 (DE)
(74) Vertreter: Katscher, Helmut, Dipl.-Ing.

(56) Entgegenhaltungen:
- DE-A- 2 248 861
- DE-A- 3 615 243
- DE-U- 8 901 245
- GB-A- 2 104 402
- US-A- 3 464 558

## Beschreibung

Die Erfindung betrifft einen Fördersiebrechen für das Abführen von gröberen Verschmutzungen aus einer Flüssigkeit mit den Merkmalen des Oberbegriffes des Anspruches 1 (wie z.B. bereits aus der DE-U-8901245.3 bekannt ist).

Mit solchen Siebrechen werden gröbere Verschmutzungen aus kommunalen Abwässern und dergleichen "herausgebaggert", d.h. das zu säubernde Wasser fließt durch einen in bestimmter Weise bemessenen Kanal, in dessen Querschnitt ein aus endlos umlaufenden Stufen bzw. Siebrechengliedern gebildeter Siebrechen hineinragt. Die Flüssigkeit durchläuft diese Stufen, von denen die Verschmutzungen aufgenommen werden. In endlos umlaufender Förderbewegung werden dann die Verschmutzungen aus der Flüssigkeit herausgehoben und in einen weit oberhalb des Kanals liegenden Umkehrbereich gebracht, dort abgeworfen, worauf bzw. wobei in aller Regel die Stufen gereinigt werden, bevor sie auf der Rücklaufseite zur Förderseite hin bewegt wieder in den Kanal eintauchen.

Es gibt Fördersiebrechen, die mit umlaufend geführten Förderkettenpaaren arbeiten, zwischen denen Siebstufen aus gelochten Blechen angeordnet sind. Ein solcher Aufbau ist zwar verhältnismäßig einfach, doch neigen solche Lochsiebstufen stark zu einer zunehmenden Verschmutzung bis hin zur Verstopfung, insbesondere durch fasrige Abwasserstoffe, die sich in den einzelnen Bohrungen verfangen. Die Säuberung eines solchen Siebstufenbleches ist besonders schwierig.

Es ist weiterhin bekannt, Fördersiebrechen dadurch zu bilden, daß man scheibenförmige Segmente senkrecht zur Förderrichtung beabstandet stapelt, derart, daß zwischen den einzelnen Segmenten ein Abstand verbleibt, der etwas größer als die Dicke der Segmente ist. Die Segmente sind dabei von Stufe zu Stufe in Förderrichtung aufeinanderfolgend versetzt, so daß jeweils Teilbereiche der Segmente der vorhergehenden Stufe die Abstände der nachfolgenden Stufe durchgreifen können. Dabei sind allerdings die Segmente über ihre Verbindungsachsen selbst miteinander zu einer Fördereinrichtung verbunden, ohne daß Förderketten vorgesehen sind. Aus diesem Grunde müssen die Segmente selbst entsprechende Zugkräfte übertragen können. Eine Besonderheit dieser Gestaltung liegt darin, daß die Segmente sich in Umlaufrichtung gesehen über die Achsrichtung zweier Stufenabstände erstrecken, wodurch zwar eine Säuberung der Abstandsräume zwischen den Segmenten erreicht werden kann, jedoch der Durchflußquerschnitt für die von den Verschmutzungen zu reinigende Flüssigkeit entsprechend beschränkt wird. Darüber hinaus ist das Auswechseln von Segmenten im Rahmen einer solchen Konstruktion verhältnismäßig kompliziert und arbeitsaufwendig.

Durch den Einsatz von Förderketten einerseits und die Ausbildung von Stufen durch Stapel beabstandeter Segmente andererseits kann man das Problem des geringen Durchflußquerschnittes lösen und zugleich eine gute Selbstreinigung in Form des Freihaltens der Abstandsräume zwischen den Segmenten mit Hilfe des Durchgriffs dieser Abstandsräume durch Segmente der folgenden Stufe erreichen. Dieser Durchgriff der Abstandsräume zwischen den Segmenten der jeweils vorhergehenden Stufe durch die Segmente der nachfolgenden Stufe erfolgt zwangsläufig von innen nach außen gerichtet. Zu diesem Zwecke sind die verdrehfest auf einem Stab angeordneten Segmente einer jeden Stufe gegenüber ihrer Halterung an den Förderketten drehbar gelagert und mit Hilfe eines Lenkhebels, der mit seinem dem Stab abgewandten Ende in eine Führungsschiene einer Lenkführungsbahn eingreift, derart gezielt verschwenkbar geführt, daß die Oberkanten der Segmente einer jeden Stufe im gesamten Förder- und Eintauchbereich des Siebrechens in einer Ebene ausgerichtet sind, wobei aufgrund einer Ablenkung eine gewisse Strecke des Fördertrumbereiches der Förderketten vor deren oberen Umlenkrollenpaar eine horizontale Ausrichtung aufweist, aufgrund derer die Oberkanten der Segmente der jeweils folgenden Stufe die Abstandsräume zwischen den Segmenten der vorhergehenden Stufe derart durchgreifen, daß sämtliche Verschmutzungen aus diesen Abstandsräumen heraus bis auf die Oberfläche bzw. Ebene der vorhergehenden Stufe gebracht werden. Aufgrund der dann erfolgenden Umlenkung werden diese Verschmutzungen abgeworfen. Nach diesem Vorgang werden die Segmente mit Hilfe ihrer Lenkhebel bzw. deren Eingriff in die entsprechend gestaltete Lenkführungsbahn wieder derart zurückgeführt, daß sie im Rücklauftrum der Förderketten wiederum mit ihrer Aufnahmekante nach oben weisend in den Kanal zurückgeführt werden. Dieses Vorgehen verlangt, daß die Lenkführungsbahn für die Lenkhebel einmal außen - beispielsweise im Bereich der ansteigenden Fördertrumstrecke - und einmal innen - in diesem Beispiel die abwärts führende Strecke des Rücklauftrumbereiches - im Bezug auf die Kettenbahn gesehen verläuft. Damit wird von der angetriebenen Förderkette aus gesehen einmal, nämlich im Fördertrumbereich, der Lenkhebel "nachgezogen", während er im Bereich des Rücklauftrumes "vorgeschoben" wird. Das bedeutet, daß der dieser Art geführte Lenkhebel eine Winkelstellung senkrecht zum parallel verlaufenden, zugehörigen Förderkettenbereich durchlaufen muß. Anders ausgedrückt kreuzt die Lenkführungsbahn die Bewegungsbahn der Förderketten im Hinblick auf die beiden schräg verlaufenden Längstrume. Da die Segmente ziemlichen Verschmutzungen ausgesetzt sind, unterliegen sie einer Reibung aneinander. Diese Reibung erzeugt einen Widerstand gegen die vorbeschriebene Kippbewegung der Segmente. Dies kann dazu führen, daß sich die Segmente nach Abwerfen des Schmutzes nicht wieder zurückdrehen, sondern überschlagen, wodurch sie mit benachbarten Stufen kollidieren. Selbst wenn man durch entsprechende Sollbruchstellen den Schaden in Grenzen zu halten suchte, würden solche Kollisionen doch Störungen im Arbeitsablauf und zusätzliche Wartungs- bzw. Auswechslungsarbeiten benötigen.

Der Erfindung liegt die Aufgabe zugrunde, einen Fördersiebrechen zu schaffen, der bei selbsttätig Verschmutzungen von den Stufen lösender Ausgestaltung, geringem Durchströmungswiderstand und hoher Wartungsfreundlichkeit besonders zuverlässig arbeitet und vorzugsweise auch größere, rollfähige Verschmutzungen sicher aufnehmen kann.

Ausgehend von einem Fördersiebrechen mit den Merkmalen des Oberbegriffes des Anspruches 1 wird diese Aufgabe erfindungsgemäß durch dessen kennzeichnende Merkmale gelöst.

Dieser Fördersiebrechen zeichnet sich dadurch aus, daß er zwischen zwei Endlos-Förderketten angeordnete Siebstufen aus Stapeln von Segmenten enthält, die derart voneinander beabstandet bzw. von Stufe zu Stufe zueinander versetzt sind, daß die Segmente der jeweils nachfolgenden Stufe in die Abstände zwischen den Segmenten der vorhergehenden Stufe eingreifen kann, wodurch zum einen eine gute Durchlässigkeit für die Flüssigkeit im Inneren des Kanales und zum anderen die Möglichkeit zur Verfügung gestellt wird, in über eine Strecke als Endabschnitt des Fördertrumbereiches unmittelbar vor dem oberen Rollenpaar, um das die Förderketten umgelenkt und angetrieben werden und wo der Abwurf der Verschmutzungen von den Aufnahmeausbildungen der Segmente erfolgt, eine selbsttätige Lösung der Verschmutzungen von den Aufnahmeausbildungen der Segmente dadurch herbeizuführen, daß die Segmente der jeweils nachfolgenden Stufe die Abstände zwischen den Segmenten der jeweils vorlaufenden Stufe durchgreifen, worauf hin nach Umlenkung um die Rollenpaare und Abwurf der Verschmutzungen, gegebenenfalls unter zusätzlich reinigendem Angriff einer Borstenwalze, die Segmente insoweit in ihrer Ausrichtung verbleiben, als sie nunmehr mit den Aufnahmeausbildungen nach unten gerichtet über den Rücklauftrumbereich der Kette geführt werden. Dadurch wird erfindungsgemäß vermieden, daß die Lenkhebel der Segmente einen rechten Winkel zum zugehörigen Förderkettenbereich durchlaufen müssen, wodurch eine Instabilität der Verschwenklage der Segmente entstehen würde. Dies läßt sich dadurch ausdrücken, daß vermieden wird, hinsichtlich der aufsteigenden bzw. abwärts gerichteten Strecke des Fördertrumbereiches bzw. des Rücklauftrumbereiches eine Kreuzung der Lenkführungsbahn gegenüber der Bewegungsbahn der Förderketten vorzusehen. Grundsätzlich kann dabei die Lenkführungsbahn für die Lenkhebel innerhalb des von den Förderketten umgriffenen Raumes verlaufen, insbesondere aber verläuft sie sowohl im Fördertrumbereich als auch im Rücklauftrumbereich hinsichtlich der aufwärts und abwärts führenden Strecken außerhalb dieses Raumes. Im Bereich der vorzugsweise horizontal ausgebildeten Strecke zwischen der Ablenkung der Förderketten und dem oberen Rollenpaar wird die Lenkführungsbahn im Hinblick auf die Bewegungsstrecke der Förderketten in jedem Falle so gelegt, daß die Abstandsräume zwischen den Segmenten einer jeden Stufe in jedem Falle völlig von den Segmenten der nachfolgenden Stufe durchgriffen werden. Dies kann je nach Lage der Lenkführungsbahn bzw. der Winkelstellung der Lenkhebel dazu führen, daß die Lenkführungsbahn parallel zu der Strecke der Förderketten oberhalb dieser, unterhalb dieser oder deckungsgleich mit dieser verlaufen kann.

Die Segmente, die sich vorzugsweise hinsichtlich der aufeinanderfolgenden Stufen auch außerhalb der vorerwähnten Strecke für den vollständigen Durchgriff der Abstandsräume zwischen den Segmenten bereits über einen Anfangsbereich ineinandergreifend überdecken, greifen also mit nach unten gerichteter Aufnahmeausbildung im Rahmen der Rückführung über den Rücklauftrumbereich der Förderketten in den Kanal und damit die in diesem strömende Flüssigkeit ein und werden durch den unteren vorzugsweise in Form von Gleitkufen ausgebildeten Umlenkbereich in ihrer Lage derart verändert, daß sie mit nach oben ausgerichteter Aufnahmeausbildung aus der Flüssigkeit auftauchen und entlang des Fördertrumbereiches bewegt werden. Um die Aufnahme von Verschmutzungen aus der Flüssigkeit bereits im Zuge der Umrundung der unteren Umlenkung zu erleichtern und insbesondere auch um rollfähige Verschmutzungen, die vor allem auf der Oberfläche der Flüssigkeit schwimmen, sicher aufnehmen zu können, ist in besonders bevorzugter Ausführung der Erfindung die Aufnahmeausbildung eines jeden Segmentes mit einer Ausnehmung versehen, die in Stabrichtung gesehen eine Mulde bildet, beispielsweise mit dreieckiger Berandung. Von besonderer Bedeutung ist hinsichtlich des Selbstsäuberungseffektes, daß diese Ausnehmungen in der vorzugsweise etwa horizontal verlaufenden Strecke unmittelbar vor dem Rollenpaar und damit dem Abwurf der Verschmutzungen von den nach oben weisenden entsprechend vorstehenden Kanten der Segmente der nachfolgenden Stufen jeweils durchgriffen werden, so daß die Verschmutzungen nicht nur aus den Abstandsräumen entfernt, sondern aus diesen Ausnehmungen der Aufnehmeausbildungen herausgehoben werden und in eine fast geschlossene Fläche gelangen, wodurch der Abwurf erheblich erleichtet wird. Um auch klebrige Substanzen noch entfernen zu können, ist vorzugsweise im Bereich des Abwurfes eine Bürsteneinrichtung, insbesondere in Form einer Borstenwalze, vorgesehen.

In bevorzugter Ausführung sind die Segmente derart gestaltet, daß der im Fördertrumbereich nach oben weisende Kantenbereich und die Aufnahmeausbildung eines jeden Segmentes in einer Ebene verlaufen, die in Anpassung an eine horizontale Ausrichtung der Strecke des Fördertrumbereiches vor dem oberen Rollenpaar ebenfalls horizontal verläuft.

Vorzugsweise ist nicht nur im Fördertrumbereich eine Ablenkung vorgesehen, die diesen Bereich in einen ersten, schräg ansteigenden Abschnitt und eine zum Rollenpaar hin bevorzugt horizontal verlaufende Strecke unterscheidet, sondern ebenfalls im Rücklauftrumbereich, und zwar in gleicher Richtung abgelenkt, so daß die Förderketten in beiden Trumbereichen etwa parallel verlaufen. Dies gilt nicht nur für den schräg aufwärts gerichteten Fördertrumabschnitt bis zur Ablenkung und den Rücklauftrumabschnitt von der Ablenkung bis zum Kanal, sondern auch hinsichtlich einer Rücklaufstrecke zwischen dem oberen Rollenpaar und der Umlenkung im Rücklauftrumbereich, die daher hinsichtlich der Anordnung der Lenkführungsbahn ähnlichen Bedingungen unterliegen kann wie im Bereich der Strecke zwischen der Ablenkung und dem oberen Rollenpaar des Fördertrumbereiches.

In besonders bevorzugter Ausführung sind die Lenkhebel derart angeordnet, daß sie in Umlaufrichtung von dem Stäben, an denen sie befestigt sind, nachgeschleppt werden. Damit lassen sich Auflaufwiderstände und Verklemmungen innerhalb der Führungsschienen der Lenkfürhungsbahn verhindern oder leichter überwinden. Die in die Führungsschienen der Lenkführungsbahn eingreifenden Enden der Lenkhebel sind als von den Lenkarmen seitlich vorstehende Gleitelemente ausgebildet, so daß keine Rollteile in den Bereich der verschmutzten Flüssigkeit gelangen.

Diese und weitere bevorzgte Ausführungen ergeben sich aus den Unteransprüchen, insbesondere im Zusammenhang mit dem in der Zeichnung wiedergegebenen Ausführungsbeispiel, auf das besonders Bezug genommen wird und dessen nachstehende Beschreibung die Erfindung näher erläutert. Es zeigen
- Figur 1: eine schematisierte Seitenansicht in Achsrichtung der Umlenkbereiche der Förderketten;
- Figur 2: eine Vorderansicht;
- Figur 3: einen Teilabschnitt der Vorderansicht in verschiedenen Ansichten bzw. Teilschnittdarstellungen;
- Figur 4: eine Seitenansicht entsprechend Figur 1 zur Veranschaulichung der Arbeitsweise des Ausführungsbeispieles.

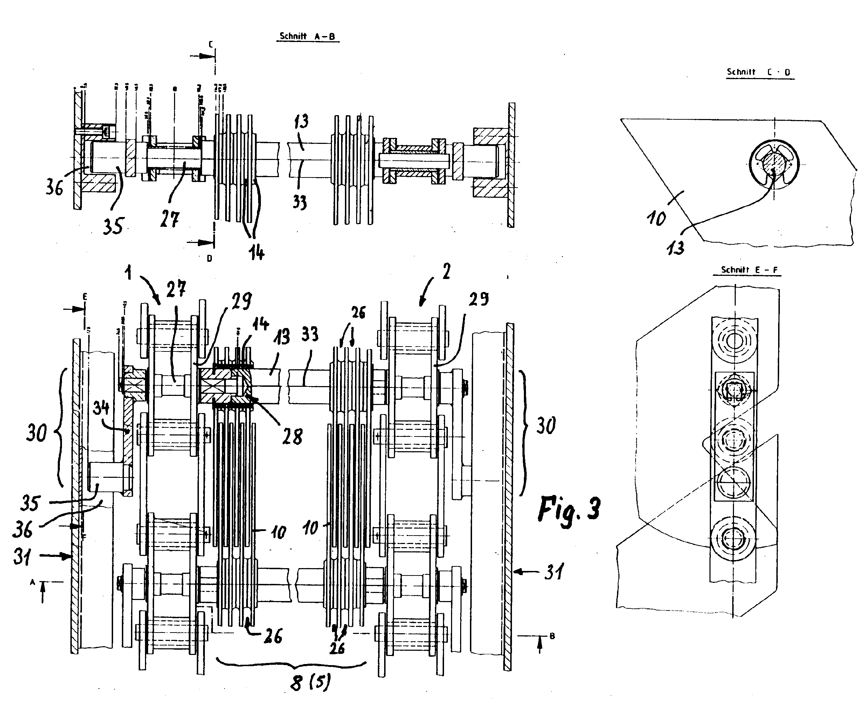

Zwei parallel laufende Förderketten 1 und 2 sind um einen unteren Umlenkbereich 3 in Form von Gleitkufen und um ein oberes Rollenpaar 4 herumgeführt, und zwar in Endlosausbildung. Zwischen den parallelen Förderketten 1 und 2 erstrecken sich insgesamt mit 5 bezeichnete Siebstufen, die mit einem stirnseitigen Ende 6 an die Förderkette 1 und mit dem anderen stirnseitigen Ende 7 an die Förderkette 2 angeschlossen sind, wie dies Figur 3 näher erkennen läßt. Die Siebstufen 5 sind aus Stapeln 8 von Segmenten 10 gebildet, wobei die Segmente als arbeitswirksame Bereiche einen im Fördertrumbereich 19 der Förderketten 1 und 2 nach oben weisenden Kantenbereich 9 und eine insgesamt mit 11 bezeichnete Aufnahmeausbildung aufweisen. Die Aufnahmeausbildung verläuft hinsichtlich ihrer nach oben gerichteten Erhebungen in einer horizontalen Ebene mit dem Kantenbereich 9. Im Aufnahmebereich 11 ist eine nach unten in das scheibenförmige Segment 10 eingebrachte Ausnehmung 12 vorgesehen, hier in Ansicht der Achsrichtungen des Umlenkbereiches 3 und des Rollenpaares 4 in Form eines Dreiecks.

Die jeweils einen Stapel 8 bildenden Segmente 10 sind auf einen Stab 13 mit Vierkantquerschnitt aufgesteckt, und zwar über eine entsprechende Vierkantöffnung. Zwischen den Segmenten 10 ist jeweils ein Abstandsraum 26 freigelassen, der etwas breiter als die Dicke der Segmente ist. Um diesen Abstandsraum 26 sicherzustellen, ist zwischen die diesem Raum benachbarten Segmente auf die Nähe des Stabes 13 beschränkt eine Hülse 14 oder aber eine Abstandsausbauchung der Segmente selbst vorgesehen.

Sowohl der Fördertrumbereich 19 als auch der Rücklauftrum 21 der Förderketten 1 und 2 sind mit Ablenkungen 17 und 18 versehen, wodurch jeweils ein schräg nach oben (Fördertrumbereich) bzw. ein parallel dazu schräg nach unten (Rücklauftrumbereich) verlaufender Trumabschnitt zwischen den Ablenkungen 17 und 18 und dem unteren Umlenkbereich 3 und eine horizontale Strecke 20 (Fördertrumbereich) bzw. eine parallel dazu verlaufende Strecke 22 (Rücklauftrumbereich) zwischen derjeweiligen Ablenkung 17 bzw. 18 und dem Rollenpaar 4 abgeteilt sind. Die Zentren der Ablenkungen 17 und 18 laufen achsparallel mit den Achsen 15 und 16 des unteren Umlenkbereiches 3 und des oberen Rollenpaares 4.

Die die einzelnen Stapel 8 von Segmenten 10 verdrehfest durchgreifenden Vierkantstäbe 13 sind beidendig in Richtung ihrer Achsen 33 jeweils mit Bolzen 27 versehen, die über Steckverbindungen 18 verdrehfest in die jeweiligen Stirnseiten der Stäbe 13 eingreifen und ihrerseits drehbar in den angrenzenden Kettengliedern 29 gelagert sind. An den die Kettenglieder 29 durchgreifenden Enden dieser Bolzen 27 sind jeweils insgesamt mit 30 bezeichnete Lenkhebel verdrehfest angebracht, deren Hebelarm 34 an seinem dem Bolzen abgewandten Ende einen Gleitkörper 35 trägt, der in eine Führungsschiene 36 eingreift. Die beiden Führungsschienen 36, auf jeder Außenseite einer der Förderketten angeordnet, bilden zusammen die Lenkführungsbahn 31. Aus den einzelnen Darstellungen und Schnittbildern der Figur 3 gehen nähere Einzelheiten hervor.

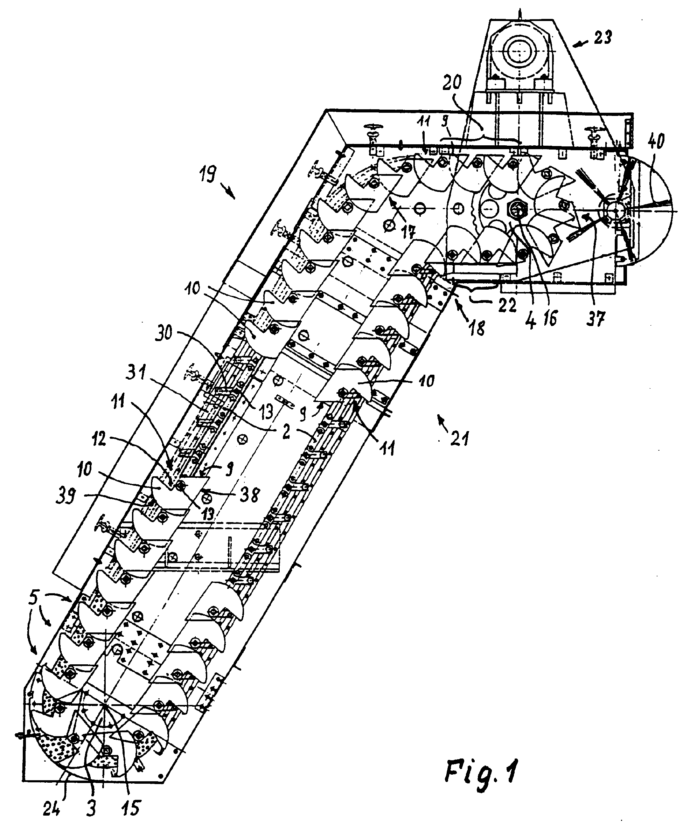

Wie aus Figur 1 ersichtlich ist, verläuft die Lenkführungsbahn 31 im Bereich der schrägen Trumabschnitte 19 und 21 jeweils parallel zu der Bewegungsbahn der Förderketten 1 und 2, und zwar außerhalb von diesen umspannten Raumes. Wie die Zeichnungen erkennen läßt, erstrecken sich die Lenkhebel 30 dabei in Bewegungsrichtung der Förderketten gesehen schräg nach hinten, werden also hinsichtlich ihrer Gleitelemente 35 in den Führungsschienen 36 der Lenkführungsbahn 31 nachgezogen. Dies gilt sowohl für den ansteigenden Fördertrumabschnitt als auch für den absteigenden Rücklauftrumabschnitt, so daß folgerichtig die Segmente im Förderabschnitt mit ihrer Aufnahmeausbildung 11 und ihrem Kantenbereich 9 nach oben und im Rücklaufabschnitt nach unten weisen. Dadurch wird es möglich, hinsichtlich der Winkelstellung der Lenkhebel keine über 90° hinausgehende Winkeländerung durchlaufen zu müssen, so daß die Lage der Segmente stabil ist, was auch für die verbleibenden Strecken 20 und 21 sowie die Umführung um das obere Rollenpaar gilt. In dem Bereich 20 und 22, insbesondere aber wichtig für den erstgenannten, ist eine Anordnung der Lenkführungsbahn dergestalt, daß die Segmente in dieser Strecke 20 mit ihren nach oben weisenden Aufnahmeausbildungen 11 und Kantenbereichen 9 in einer Ebene liegen, d.h. die Kantenbereiche 9 durchgreifen die Abstandsräume 26 zwischen den Segmenten 10 der jeweils vorangehenden Stufe 5 und heben dabei die aufgenommen Verunreinigungen aus den muldenförmigen Ausnehmungen 12 heraus, wie dies die Figur 1 ohne weiteres erkennen läßt. Das so angehobene und gelockerte aufgenommene Gut wird samt den aus den Abstandsräumen herausgeschobenen Anteilen sodann im Umkehrbereich 37 des Rollenpaares 4 von den Segmenten abgeworfen, wobei eine Borstenwalze 40 zusätzlich insbesondere klebrige Rückstände entfernt.

Das Segment 10 ist neben der Aufnahmeausbildung 11 mit der Ausnehmung 12 und dem Kantenbereich 9 durch eine von der letzteren spitzwinklig ausgehende geradlinige Rückkante 38 und eine diese mit dem äußeren Endbereich der Aufnahmeausbildung verbindende gewölbte Kante 39 berandet, wie dies ebenfalls aus Figur 1 ersichtlich ist.

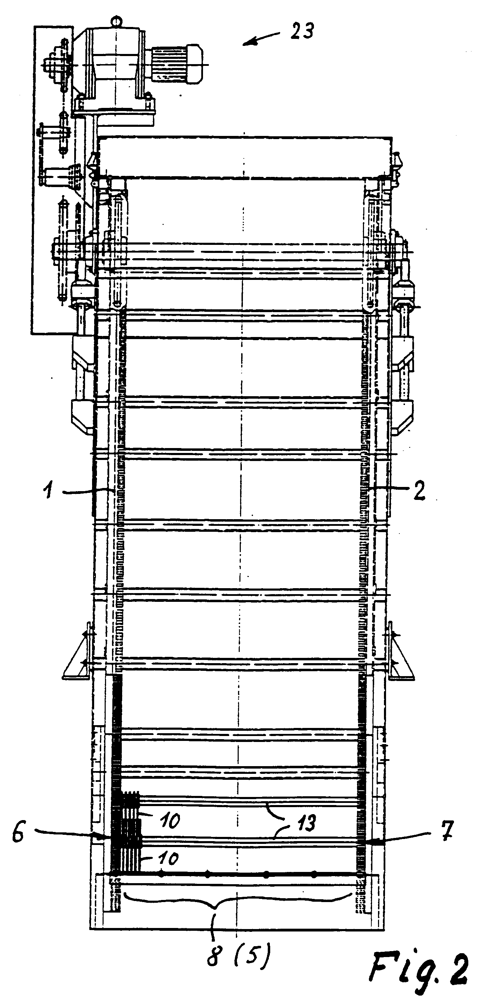

Wie die Figuren 1, 2 und 4 erkennen lassen, ist oberhalb des Rollenpaares 4 ein Antriebsaggregat 23 vorgesehen, das das obere Rollenpaar für die Umlaufbewegung der Förderketten antreibt und zugleich der Rotationsbewegung der Borstenwalze 40 dienen kann.

Wie Figur 3 erkennen läßt, sind die Siebstufen 5 bzw. Stapel 8 aus Segmenten 10 auf den Stäben 13 in einfachster Weise zu demontieren und auch in Einzelteilen zu ersetzen. Die Steckverbindung zwischen den Bolzen 27 und den zugehörigen Stäben 13 führt außerdem dazu, daß der Abstand zwischen den stirnseitgen Enden der Stapel und den jeweils benachbarten Förderketten sehr gering gehalten werden kann, so daß der freibleibende Durchströmraum für die Flüssigkeit an den Stufen vorbei minimiert ist.

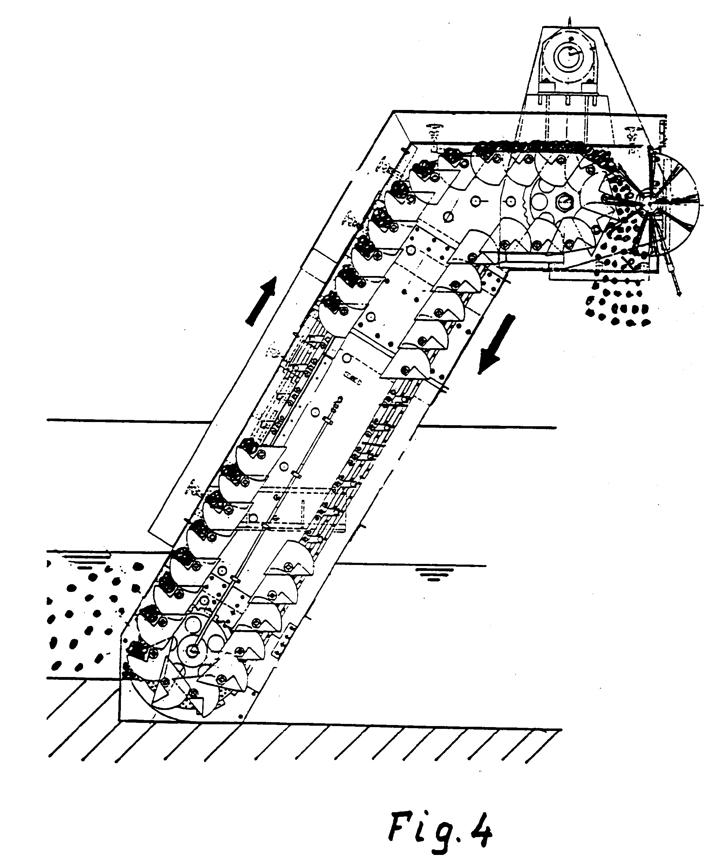

Figur 4 soll lediglich die Arbeitsweise des Siebrechens verdeutlichen, also die Aufnahme von Verunreinigungen im Bereich der Aufnahmeausbildung nebst Ausnehmung der Segmente, wobei auch rollfähige Gegenstände sicher erfaßt werden. Im oberen Endbereich des Fördertrums werden die Verunreinigungen aus den Abständen zwischen den Segmenten und aus den Ausnehmungen auf eine in etwa geschlossene Fläche angehoben und so gelockert und für das Abwerfen vorbereitet.

## Patentansprüche

1. Fördersiebrechen für das Abführen von gröberen Verschmutzungen aus einer Flüssigkeit, insbesondere kommunales Abwasser oder dergleichen, die durch einen an die Breite des Siebrechens angepaßten Kanal fließt, mit zwei parallel verlaufend angeordneten, endlos ausgebildeten Förderketten (1, 2), die um einen unteren, im Bodenbereich des Kanals angeordneten Umlenkbereich (3) und um ein in Strömungsrichtung der Flüssigkeit schräg geneigt darüber außerhalb des Kanals angeordnetes oberes Rollenpaar (4) umlaufend angetrieben und im Umlauftrumbereich vor dem oberen Rollenpaar (4) hinsichtlich der Verbindungsgeraden zwischen den Mittelachsen (15, 16) des unteren Umlenkbereiches (3) und des oberen Rollenpaares (4) nach außen gerichtet abgelenkt geführt sind, zwischen welchen Förderketten (1, 2) sich etwa senkrecht zur Kettenlängsrichtung erstreckende Siebstufen (5) befinden, die mit je einem stirnseitigen Ende (6, 7) an einer der Förderketten (1, 2) gehalten sind, in ununterbrochener Reihe in Umlaufrichtung der Förderketten (1, 2) aufeinanderfolgen und jeweils aus einem sich zwischen den Förderketten (1, 2) erstreckenden Stapel (8) von scheibenförmigen Segmenten (10) bestehen, die in Stapelrichtung um etwas mehr als ihre Stapeldicke voneinander beabstandet und verdrehfest an einem gegenüber den seitlichen Kettengliedern (29) verschwenkbaren Stab (13) gehalten sind, an deren jedem wenigstens ein Lenkhebel (30) einen Endes verdrehfest angeschlossen ist, der anderen Endes in eine Führungsschiene (36) einer Lenkführungsbahn (31) eingreift, die die Verschwenklage der Lenkhebel (30) und damit der jeweils zugeordneten Segmentstapel (8) im Zuge des Umlaufes derart steuern, daß die Segmente (10) mit ihrer kantenseitigen Aufnahmeausbildung (11) nach oben gerichtet aus der Flüssigkeit im Kanal ausgehoben, etwa in dieser Stellung verbleibend bis zu der Ablenkung (17) gehalten und wenigstens im Ablaufbereich (37) des oberen Rollenpaares (4) derart verschwenkt sind, daß die kantenseitigen Aufnahmeausbildungen (11) der Segmente (10) in eine geneigte Lage für den Abwurf der Verschmutzungen ausgerichtet sind, wobei die Segmente (10) jeweils benachbarter Stapel (8) der aufeinanderfolgenden Stufen (5) derart angeordnet sind, daß in Umlaufrichtung gesehen jeweils ein Segment (10) auf den Abstandsraum (26) zwischen den Segmenten (10) der benachbarten Stapel (8) ausgerichtet ist und die Verschwenkung der Stapel (8) durch die Lenkführungsbahn (31) innerhalb der Strecke (20) zwischen der Ablenkung (17) und dem oberen Rollenpaar (4) derart getroffen ist, daß die Segmente (10) eines jeden Stapels (8) bzw. einer jeden Stufe (5) mit einem nach oben weisenden Kantenbereich (9) in die jeweils fluchtend ausgerichteten Abstandräume (26) zwischen benachbarten Segmenten (10) der in Umlaufrichtung vorhergehenden Stufe (5) derart eingreifen, daß diese Abstandsräume (26) im Bereich der Aufnahmeausbildungen (11) der Segmente (10) der jeweils folgenden Stufe (5) im Zuge der Förderkettenbewegung durchgriffen und somit zwangsgesäubert sind,
**dadurch gekennzeichnet,**
daß die Lenkführungsbahn (31) und die Umlaufbahn der Förderketten (1, 2) in Richtung der Achsen (15, 16) des unteren Umlenkbereiches (3), des oberen Rollenpaares (4) und der Auslenkung (17) gesehen zumindest außerhalb der zwischen der Ablenkung (17) und dem oberen Rollenpaar (4) verlaufenden Strecke (20) kreuzungsfrei verlaufend angeordnet sind, so daß die kantenseitigen Aufnahmeausbildungen (11) der Segmente (10) der im Fördertrumbereich (19) von dem unteren Umlenkbereich (3) über die Ablenkung (17) zu dem oberen Rollenpaar (4) bewegten Stufen (5) nach oben und diejenigen der im Rücklauftrumbereich (21) von dem oberen Rollenpaar (4) zu dem unteren Umlenkbereich (3) bewegten Stufen (5) nach unten weisend ausgerichtet sind.

2. Siebrechen nach Anspruch 1,
**dadurch gekennzeichnet,**
daß die Segmente (10) einer jeden Stufe (5) mit einem nach oben weisenden Kantenbereich (9) in die Abstandsräume (26) zwischen den Segmenten (10) der jeweils vorlaufenden Stufe (5) auch im Fördertrumbereich (19) bereits über einen geringen Teilbereich eingreifen und vorzugsweise im Umlaufbereich (37) des oberen Rollenpaares (4) dem Angriff einer Reinigungsbürste, insbesondere in Gestalt einer Borstenwalze (40) ausgesetzt sind.

3. Siebrechen nach Anspruch 1 oder 2,
**dadurch gekennzeichnet,**
daß der im Fördertrumbereich (19) nach oben weisende Kantenbereich (9) der Segmente (10) etwa ausgehend von dem rotierend an den Förderketten (1, 2) gelagerten Stab (13) ins Innere des von den Förderketten (1, 2) umgriffenen Raumes hineinragt und daß die Aufnahmeausbildung (11) etwa von dem Stab (13) ausgehend in einem nach außerhalb dieses Raumes gerichteten Bereich vorgesehen ist und einen muldenförmigen Kantenverlauf (12) aufweist.

4. Siebrechen nach einem der Ansprüche 1 bis 3,
**dadurch gekennzeichnet,**
daß die an die vom unteren Umlenkbereich (3) ausgehende, schräg aufwärts führende Förderstrecke nach der Ablenkung (17) anschließende Strecke (20) bis zum oberen Rollenpaar (4) etwa horizontal verlaufend ausgebildet ist.

5. Siebrechen nach einem der Ansprüche 1 bis 4,
**dadurch gekennzeichnet,**
daß der im Fördertrumbereich (19) nach oben weisende Kantenbereich (9) und die Aufnahmeausbildung (11) eines jeden Segmentes (10) in einer - vorzugsweise horizontalen - Ebene verlaufen, wobei im Bereich der Aufnahmeausbildung (11) eine in den Scheibenbereich des Segmentes (10) eingreifende, eine - vorzugsweise in Stabrichtung gesehen dreieckige - Aufnahmemulde bildende Ausnehmung (12) vorgesehen ist.

6. Siebrechen nach einem der Ansprüche 1 bis 5,
**dadurch gekennzeichnet,**
daß die Lenkführungsbahn (31) im Bereich der Strecke (20) zwischen der Ablenkung (17) und dem oberen Rollenpaar (4) in Abhängigkeit von der Winkelstellung der Lenkhebel (30) zu den Segmenten (10) parallel oberhalb oder unterhalb der Bewegungsbahn der Förderketten (1, 2) oder diese überlappend verläuft, so daß die nach oben weisenden Kantenbereiche (9) der Segmente (10) der jeweils in Bewegungsrichtung nachfolgenden Stufe (5) nach Durchgreifen der Abstandsräume (26) zwischen den Segmenten (10) der jeweils vorlaufenden Stufen (5) unterhalb deren Aufnahmeausbildungen (11) mit deren oberer Begrenzung etwa in eine gemeinsame Ebene gelangen und eine insoweit fast geschlossene Fläche bilden, auf die die Verschmutzungen - auch aus eventuell vorgesehenen Aussparungen (12) im Bereich der Aufnahmeausbildungen (11) - angehoben sind.

7. Siebrechen nach einem der Ansprüche 1 bis 6,
**dadurch gekennzeichnet,**
daß auch der Rücklauftrumbereich (21) der Förderketten (1, 2) von dem oberen Rollenpaar (4) zu dem unteren Umlenkbereich (3) auf die Ablenkung (17) des Fördertrumbereiches (19) hin abgelenkt geführt ist, so daß beide Trumbereiche (19, 21) über weite Strecken parallel zueinander verlaufen, wobei ein Parallelverlauf des Rücklauftrumbereiches zur Strecke (20) zwischen Ablenkung (17) und oberem Rollenpaar (4) des Fördertrumbereiches eine ähnliche Abweichung im Verlauf der Lankführungsbahn (31) bedingen kann.

8. Siebrechen nach einem der Ansprüche 1 bis 7,
**dadurch gekennzeichnet,**
daß die Lenkhebel (30) zum parallel verlaufenden Förderkettenbereich über den gesamten Umlauf hinweg einen Winkelbereich < 90° beibehalten und vorzugsweise von dem zugeordneten Stab (13) geschleppt sind, so daß das dem Stab (13) abgewandte Ende des Lenkhebels (30) nachlaufend in die vorzugsweise zumindest weitgehend außerhalb des von den Förderketten (1, 2) umgriffenen Raumes verlaufend angeordnete Lenkführungsbahn (31) bzw. deren Führungsschiene (36) eingreifen.

9. Siebrechen nach einem der Ansprüche 1 bis 8,
**dadurch gekennzeichnet,**
daß die in die Führungsschienen (36) der Lenkführungsbahn (31) eingreifenden Enden der Lenkhebel (30) als von dem Hebelarm (34) seitlich abstehende Gleitelemente (35) ausgebildet sind und daß vorzugsweise auch der untere Umlenkbereich (3) für die Förderketten (1, 2) als Paar von Gleitkurven ausgebildet ist.

10. Siebrechen nach einem der Ansprüche 1 bis 9,
**dadurch gekennzeichnet,**
daß die die Segmente (10) verdrehfest haltenden Stäbe (13) als Vierkantstangen ausgebildet sind, auf die die mit angepaßten Vierkantöffnungen versehenen Segmente (10) unter Abstand haltenden Zwischenhülsen oder Auskragungen (14) der Segmente (10) selbst ausgeschoben sind und die über drehsichere Steckverbindungen (28) mit Bolzen (27) verbunden sind, die in den nahe beabstandeten zugehörigen Förderkettengliedern (29) drehbar gelagert sind und an deren die Kettenglieder (29) durchgreifenden Enden die Lenkhebel (30) verdrehfest angeschlossen sind.

## Claims

1. Conveying sieve grid for the removal of relatively coarse contamination from a liquid, in particular municipal waste water or the like, which flows through a channel adapted to the width of the sieve grid, with two conveying chains (1, 2) arranged to extend in parallel and constructed in an endless manner, which are driven to rotate about a lower deflection region (3) located in the bottom region of the channel and around an upper pair of rollers (4) inclined obliquely in the flow direction of the liquid and arranged thereabove outside the channel and in the circulating run region in front of the upper pair of rollers (4), as regard the connecting straight lines between the central axes (15, 16) of the lower deflection region (3) and of the upper pair of rollers (4), are guided in a deflected manner, directed outwards, between which conveying chains (1, 2) sieve stages (5) extending approximately perpendicularly to the longitudinal direction of the chains are located, which are held by respectively one front end (6, 7) on one of the conveying chains (1, 2), follow each other in an uninterrupted row in the direction of rotation of the conveying chains (1, 2) and each consist of a stack (8) of disc-shaped segments (10) extending between the conveying chains (1, 2), which segments are spaced apart in the direction of the stack by somewhat more than their stack thickness and are held without relative rotation on a rod (13) able to tilt with respect to the lateral chain links (29), to each of which at least one steering lever (30) at one end is connected without relative rotation, the other end engaging in a guide rail (36) of a steering guide path (31), which control the tilting position of the steering levers (30) and thus of the respectively associated segment stack (8) in the course of the circulation so that the segments (10) are raised out of the liquid in the channel with their recess construction (11) on the edge side directed upwards, are held approximately in this position until the deflection (17) and at least in the discharge region (37) of the upper pair of rollers (4) are tilted so that the receiving constructions (11) on the edge sides of the segments (10) are aligned in an inclined position for the ejection of the contaminations, the segments (10) of respectively adjacent stacks (8) of the successive stages (5) being arranged so that, seen in the circulating direction, one segment (10) is respectively aligned with the gap (26) between the segments (10) of the adjacent stack (8) and the tilting of the stack (8) by the steering guide path (31) within the section (20) between the deflection (17) and the upper pair of rollers (4) is such that the segments (10) of each stack (8) or of each stage (5) engage with an upwardly pointing edge region (9) in the respectively aligned gaps (26) between adjacent segments (10) of the preceding stage (5) in the circulating direction so that in the region of the receiving constructions (11) of the segments (10) of the respectively following stage (5), in the course of the conveying chain movement, these gaps (26) are penetrated and thus cleaned in an enforced manner, characterised in that the steering guide path (31) and the circulating path of the conveying chains (1, 2), seen in the direction of the axes (15, 16) of the lower deflection region (3), of the upper pair of rollers (4) and of the deflection (17), at least outside the section (20) extending between the deflection (17) and the upper pair of rollers (4), are arranged to extend in a manner free from intersections, so that the receiving constructions (11) on the edge sides of the segments (10) of the stages (5) moved in the conveying run region (9) from the lower deflection region (3) by way of the deflection (17) to the upper pair of rollers (4) point upwards and those of the stages (5) moved in the return run region (21) from the upper pair of rollers (4) to the lower deflection region (3) are aligned to point downwards.

2. Sieve grid according to Claim 1, characterised in that the segments (10) of each stage (5) engage with an upwardly pointing edge region (9) in the gaps (26) between the segments (10) of the respectively preceding stage (5), even in the conveying run region (19) already over a small partial region and preferably in the circulating region (37) of the upper pair of rollers (4), are exposed to the action of a cleaning brush, in particular in the form of a brush roller (40).

3. Sieve grid according to Claim 1 or 2, characterised in that the edge region (9) of the segments (10), pointing upwards in the conveying run region (19), starting approximately from the bar (13) mounted to rotate on the conveying chains (1, 2), projects into the inside of the space surrounded by the conveying chains (1, 2) and that starting approximately from the rod (13), the receiving construction (11) is provided in a region directed towards the outside of this space and comprises a trough-like edge (12).

4. Sieve grid according to one of Claims 1 to 3, characterised in that the section (20) adjoining the conveying section starting from the lower deflection region (3) and leading obliquely upwards, after the deflection (17), is constructed to extend approximately horizontally as far as the upper pair of rollers (4).

5. Sieve grid according to one of Claims 1 to 4, characterised in that the edge region (9) pointing upwards in the conveying run region (19) and the receiving construction (11) of each segment (10) extend in a plane, which is preferably horizontal, whereby in the region of the receiving construction (11), a recess (12) forming the receiving trough - which is preferably triangular seen in the rod direction, and engaging in the disc region of the segment (10) is provided.

6. Sieve grid according to one of Claims 1 to 5, characterised in that in the region of the section (20) between the deflection (17) and the upper pair of rollers (4), depending on the angular position of the steering levers (30) with respect to the segments (10), the steering guide path (31) extends above or below the path of movement of the conveying chains (1, 2) or overlapping the latter, so that the upwardly pointing edge regions (9) of the segments (10) of the stage (5) respectively following in the direction of movement, after penetrating the gaps (26) between the segments (10) of the respectively preceding stages (5) below its receiving constructions (11), come approximately into a common plane with its upper boundary and form a surface which in this respect is almost closed, on which the contaminations are extracted, even from recesses (12) possibly provided in the region of the receiving constructions (11).

7. Sieve grid according to one of Claims 1 to 6, characterised in that even the return run region (21) of the conveying chains (1, 2) from the upper pair of rollers (4) to the lower deflection region (3) is deflected towards the deflection (17) of the conveying run region (19), so that both run regions (19, 21) extend parallel to each other over wide sections, whereby parallel running of the return run region to the section (20) between the deflection (17) and upper pair of rollers (4) of the conveying run region being able to cause a similar deviation in the course of the steering guide path (31).

8. Sieve grid according to one of Claims 1 to 7, characterised in that at the conveying chain region extending in parallel, the steering levers (30) maintain an angular range of < 90° over the entire circulation and are preferably towed by the associated rod (13), so that the end of the steering lever (30) remote from the rod (13) engages in a trailing manner in the steering guide path (31) or its guide rail (36) arranged to extend preferably at least largely outside tire space surrounded by the conveying chains (1, 2).

9. Sieve grid according to one of Claims 1 to 8, characterised in that the ends of the steering levers (30) engaging in the guide rails (36) of the steering guide path (31) are constructed as sliding members (35) projecting laterally from the lever arm (34) and that preferably even the lower deflection region (3) for the conveying chains (1, 2) is constructed as a pair of sliding cams.

10. Sieve grid according to one of Claims 1 to 9, characterised in that the rods (13) holding the segments (10) without relative rotation are constructed as square rods, on which the segments (10) provided with adapted square openings are pushed out below intermediate sleeves or projections (14) of the segments (10) themselves maintaining the spacing and which are connected by way of non-rotating plug connections (28) to bolts (27), which are mounted to rotate in the closely spaced associated conveying chain members (29) and to whose ends penetrating the chain links (29), the steering levers (30) are connected without relative rotation.

## Revendications

1. Grille de criblage à transporteur pour l'évacuation de crasses d'un liquide, en particulier d'eaux usées communales ou analogues, qui s'écoule à travers un canal ajusté à la largeur de la grille de criblage, comportant deux chaînes de transport sans fin (1,2) se déplaçant en parallèle, entraînées en rotation autour d'une zone de renvoi inférieure (3) agencée dans la zone du fond du canal et autour d'une paire de rouleaux supérieure (4) agencée au-dessus du canal dans la direction d'écoulement du liquide selon une certaine inclinaison vis-à-vis du canal et guidées de manière à dévier vers l'extérieur dans la zone du compartiment de transport devant la paire de rouleaux supérieure (4) vis-à-vis des lignes de liaisons joignant les axes centraux (15,16) de la zone de renvoi inférieure (3) et de la paire de rouleaux supérieure (4), chaînes (1,2) entre lesquelles se trouvent des étages de criblage s'étendant à peu près perpendiculairement à la direction longitudinale des chaînes, qui sont fixés respectivement par leur extrémité frontale (6,7) à l'une des chaînes de transport (1,2), se succèdent de manière ininterrompue dans la direction de déplacement des chaînes de transport (1,2) et sont constitués respectivement d'une pile de segments en forme de disques (10) s'étendant entre les chaînes de transport (1,2), qui sont distants les uns des autres d'un peu plus de l'épaisseur de leur pile dans la direction d'empilage et sont retenus de manière à ne pouvoir tourner sur une tige (13) susceptible de pivoter vis-à-vis des maillons latéraux (29) des chaînes et auquel au moins un levier directeur est raccordé de manière à ne pouvoir tourner, par une extrémité, tandis que l'autre extrémité s'enclenche dans dans un rail de guidage (36) d'un voie de guidage (31) qui commande la position de pivotement du levier directeur (30) et, par suite, de la pile de segments (8) au cours de la circulation en sorte que les segments (10) et leurs contours collecteurs latéraux (11) soient soulevés vers le haut pour se dégager du liquide du canal, soient maintenus plus ou moins dans cette position jusqu'au point de changement de direction (17) et pivotent au moins dans la zone d'évacuation (37) de la paire de rouleaux supérieure (4) de telle manière que les contours collecteurs latéraux (11) des segments (10) soient inclinés pour décharger les crasses, les segments (10) respectifs de piles voisines (8) des étages successifs (5) étant agencés de sorte que, en se plaçant dans la direction de rotation, respectivement, un segment (10) soit centré dans l'espacement (26) formés entre les segments (10) de la pile voisine (8) et que le pivotement de la pile (8) par la voie de guidage (31) à l'intérieur du tronçon (20) se fasse entre le point de changement de direction (17) et la paire de rouleaux supérieure (4) en sorte que les segments (10) d'une pile respective (8) ou d'un étage respectif (5) s'engagent, par leurs bords (9) tournés vers le haut, dans les espacements (26) respectivement alignés entre des segments voisins (10) de l'étage (5) précédant dans la direction de déplacement de telle sorte que ces espacements (26) soient remplis dans la zone des contours collecteurs (11) des segments (10) de l'étage (5) suivant respectivement au cours du déplacement des chaînes de transport et soient ainsi automatiquement nettoyés, caractérisée en ce que la voie de guidage (31) et la voie de rotation des chaînes de transport (1,2), en se plaçant dans la direction des axes (15,16) de la zone de renvoi inférieure (3), de la paire de rouleaux supérieure (4) et du point de changement de direction (17), sont agencées de manière à s'étendre sans se croiser au moins à l'extérieur du tronçon (20) s'étendant entre le point de changement de direction (17) et la paire de rouleaux supérieure (4), en sorte que les contours collecteurs latéraux (11) des segments (10) des étages (5) déplacés dans la zone du compartiment de transport (19), de la zone de renvoi inférieure (3) à la paire de rouleaux supérieure (4) via le point de changement de direction (17), soient tournés vers le haut tandis que ceux déplacés dans la zone du compartiment de retour (21), de la paire de rouleaux supérieure (4) à la zone de renvoi inférieure (3), sont tournés vers le bas.

2. Grille de criblage selon la revendication 1, caractérisée en ce que les segments (10) d'un étage respectif (5) s'engagent déjà sur une petite zone partielle, par leurs bords tournés vers le haut, dans les espacements (26) entre les segments (10) de l'étage (5) précédant respectivement même dans la zone du compartiment de transport (19) et sont exposés, de préférence dans la zone de rotation (37) autour de la paire de rouleaux supérieure (4), à l'action d'une brosse, en particulier sous la forme d'un rouleau à brosse (40).

3. Grille de criblage selon la revendication 1 ou 2, caractérisée en ce que les bords (9) des segments (10) tournés vers le haut dans la zone du compartiment de transport (19) dépassent un peu la tige (13) montée à rotation sur les chaînes de transport (1,2) à l'intérieur de l'espace circonscrit par les chaînes de transport (1,2) et le contour collecteur (11) dépasse un peu de la tige (13) dans une zone tournée vers l'extérieur de cet espace et présente une forme d'auget (12).

4. Grille de criblage selon l'une quelconque des revendications 1 à 3, caractérisée en ce que le tronçon (20) qui se raccorde au tronçon de transport issu de la zone de renvoi inférieure (3) et qui est incliné vers l'extérieur après le point de changement de direction (17) s'étend à peu près horizontalement jusqu'à la paire de rouleaux supérieure (4).

5. Grille de criblage selon l'une quelconque des revendications 1 à 4, caractérisée en ce que les bords (9) tournés vers le haut dans la zone du compartiment de transport (19) et le contour collecteur (11) de chaque segment respectif (10) s'étendent dans un plan - de préférence horizontal - dans lequel il est prévu, dans la zone du contour collecteur (11), un évidement (12) ménagé dans la zone en forme de disque du segment (10) et formant un auget collecteur - de préférence triangulaire lorsqu'on l'observe dans la direction de la tige.

6. Grille de criblage selon l'une quelconque des revendications 1 à 5, caractérisée en ce que la voie de guidage (31) s'étend, dans la zone du tronçon 20, entre le point de changement de direction (17) et la paire de rouleaux supérieure (4), en fonction de la position angulaire du levier directeur (30), vis-à-vis des segments (10) parallèlement au-dessus ou au-dessous de la voie de déplacement des chaînes de transport (1, 2) ou en sorte de chevaucher celles-ci de telle sorte que les bords (9) tournés vers le haut des segments (10) de l'étage (5) faisant suite respectivement dans la direction de déplacement soient, par engagement dans les espacements (26) entre les segments (10) des étages (5) précédant respectivement, en dessous de leurs contours collecteurs (11), plus ou moins dans un plan commun avec leurs limites supérieures et forment une surface presque fermée sur laquelle les crasses - provenant également d'évidements (12) éventuellement prévus dans la zone des contours collecteurs (11) - sont soulevées.

7. Grille de criblage selon l'une quelconque des revendications 1 à 6, caractérisée en ce que la zone du compartiment de renvoi (21) des chaînes de transport (1,2) est également guidée de la paire de rouleaux supérieure (4) à la zone de renvoi inférieure (3) en s'articulant autour du point de changement de direction (17) de la zone du compartiment de transport (19), de telle sorte que les deux zones des compartiments (19, 21) s'étendent parallèlement l'une à l'autre sur de larges tronçons, un tracé parallèle de la zone du compartiment de renvoi sur le tronçon (20) entre le point de changement de direction (17) et la paire de rouleaux supérieure (4) de la zone du compartiment de transport pouvant entraîner un écart similaire dans le tracé de la voie de guidage (31).

8. Grille de criblage selon l'une quelconque des revendications 1 à 7, caractérisée en ce que les leviers directeurs (30) conservent une plage angulaire inférieure à 90° vis-à-vis de la zone des chaînes de transport s'étendant parallèlement sur toute la trajectoire et sont de préférence entraînés par la tige (13) qui leur est affectée de telle sorte que l'extrémité du levier pivotant (30) tournée à l'opposé de la tige (13) s'engage ensuite dans la voie de guidage (31) ou son rail de guidage (36) agencé(s) de manière à s'étendre de préférence au moins largement à l'extérieur de l'espace enserré par les chaînes de transport (1, 2).

9. Grille de criblage selon l'une quelconque des revendications 1 à 8, caractérisée en ce que les extrémités de leviers directeurs (30) s'engagent dans les rails de guidage (36) de la voie de guidage (31) sont conformées en éléments glissant espacés latéralement du bras de levier (31) et en ce que, de préférence, la zone de renvoi inférieure (3) des chaînes de transport (1,2) se présentent sous la forme de glissières courbes.

10. Grille de criblage selon l'une quelconque des revendications 1 à 9, caractérisée en ce que les tiges (13) maintenant les segments (10) de manière résistant à la torsion se présentant sous la forme de tiges carrées sur lesquelles les segments (10) dotés d'ouvertures carrées adaptées sont insérés avec un espacement ménagé via des douilles intercalaires de retenue ou des saillies (14) des segments (10) eux-mêmes et sont reliés via des connexions (28) anti-torsion à des boulons (27) qui sont montés à rotation dans les maillons proches (29) des chaînes de transport et aux extrémités engagées dans les maillons de chaîne (29) desquels les leviers pivotants (30) sont raccordés de manière résistant à la torsion.
